Europäisches Patentamt

European Patent Office

Office européen des brevets

(11) Veröffentlichungsnummer: **0 140 397**
**B1**

## (12) EUROPÄISCHE PATENTSCHRIFT

(45) Veröffentlichungstag der Patentschrift: **09.05.90**

(21) Anmeldenummer: **84201056.3**

(22) Anmeldetag: **16.07.84**

(51) Int. Cl.⁵: **H 02 G 1/12**

(54) Abisoliergerät für Koaxialkabel.

(30) Priorität: **26.08.83 SE 8304627**

(43) Veröffentlichungstag der Anmeldung:
**08.05.85 Patentblatt 85/19**

(45) Bekanntmachung des Hinweises auf die
Patenterteilung:
**09.05.90 Patentblatt 90/19**

(84) Benannte Vertragsstaaten:
**CH DE FR GB IT LI SE**

(56) Entgegenhaltungen:
**US-A-3 161 088**
**US-A-3 688 404**

(73) Patentinhaber: **C.A. Weidmüller GmbH & Co.**
**Postfach 950 Paderborner Strasse 175**
**D-4930 Detmold 14 (DE)**

(72) Erfinder: **Undin, Hans**
**Stora Skogsrundan 55**
**S-184 00 Akersberga (SE)**
Erfinder: **Wiener, Hans**
**Drakskeppsvägen 10**
**S-183 63 Täby (SE)**

(74) Vertreter: **Klauber, Tomas**
**Patentbyran Klauber & Co. AB Kungstensgatan 48**
**S-113 59 Stockholm (SE)**

Courier Press, Leamington Spa, England.

EP 0 140 397 B1

# Beschreibung

Die Erfindung bezieht sich auf ein Abisoliergerät für Koaxialkabel von dem im Oberbegriff des Patentanspruchs 1 angeführtem Typ welcher u.a. eine Führungsbahn für ein Endstück des abzuisolierenden Kabels und zumindest zwei in Drehbewegung um dieses Endstück herum bewegbare Messer aufweist die vorerst bloss einen kurzen Einschnitt in dem Kabel herbeiführen, der dann durch gegenseitige Drehbewegung auf den ganzen Umkreis des Kabels erweitert wird.

Ein Koaxialkabel weist bekannter Weise einen inneren leitenden Kern, eine diesen umschliessende innere Isolationshülle, eine diese umschliessende äussere leitende Schicht (Abschirmung) und schliesslich eine die äussere leitende Schicht umschliessende äussere Isolationsschicht auf. Bei der Abisolierung oder Abmantelung wird ein dem Kabelende am nächsten gelegener Einschnitt durchgeführt der am tiefsten reicht und alle genannten Schichten bis auf dem leitenden Kern durchtrennt, und in gewissem Abstand von dem ersten Einschnitt wird ein zweiter Einschnitt durchgeführt der nur die äussere Isolationsschicht durchtrennt, so dass nach dem Entfernen des abgetrennten Isolationsteiles die äussere leitende Schicht blossgelegt wird. Zwischen dem ersten und dem zweiten Einschnitt kann gegebenenfalls noch ein weiterer Einschnitt durchgeführt werden, der die äussere Isolationsschicht und die äussere leitende Schicht durchtrennt, so dass nach Entfernen der abgetrennten Teile ein Abschnitt der inneren Isolationsschicht blossgelegt wird.

Alle diese Einschnitte werden bei Abisoliergeräten des betreffenden Typs vorerst punkt- bzw. stellenweise durchgeführt und danach durch gegenseitige Drehung der Messer und des Kabels auf den ganzen Umfang des Kabels erweitert. Hierbei tritt die Ungelegenheit auf, dass der erste tiefe Einschnitt ein Verdrängen der durchgeschnittenen Schichten in Längsrichtung des Kabels nach beiden Seiten hin mit sich bringt. Das den anderen und gegebenenfalls auch den weiteren Einschnitt durchführende Messer steht jedoch einer unbehinderten Bewegung der verdrängten Isolationsschichten jenseits dieser Einschnittstellen im Wege. Auf der verhältnismässig kurzen Strecke zwischen den benachbarten Einschnittstellen entsteht somit eine gewisse Materialstauung welche die Reibung zwischen dem Kabel und den eindringenden Messern erhöht, so dass zur Durchführung der genannten Drehbewegung ein grösserer Kraftaufwand erforderlich ist. Zur Herabsetzung dieser Reibung bei Abisoliergeräten ähnlicher Art, aber für nicht-koaxiale Kabel, wo die Situation nicht durch die vorgenannte Materialstauung erschwert wird, ist vorgeschlagen worden (DE—A—31 40 193) in der Auflagefläche für das Kabel eine Ausbuchtung anzuordnen, in die ein Teil der Isolation eindringen kann, und/oder dem Messer eine besondere Querschnittsform (diejenige einer dünnen bikonvexen Linse) zu verleihen.

In der US—A 3,161,088 ist ein Abisoliergerät für Koaxialkabel beschrieben, welches einen länglichen, rohrförmigen Handgriffsteil mit einer durchgehenden Öffnung bzw. Bohrung für das behandelte Kabel, und einen koaxial und in vollem Umfang drehbar angeschlossen, länglichen rohrförmigen Führungsbahnteil mit einer Öffnung bzw. Bohrung, welche eine Führungsbahn für ein aus dem Handgriffsteil herausragendes Kabel bildet. Beide Teile sind annähernd gleich gross und gleichartig gestaltet, und sind angepasst mit je einer Hand umfasst und gegenseitig verdreht zu werden.

In beiden Teilen sind mit den Öffnungen verbundene axial verlaufende Schlitze angeordnet. Im Schlitz im Handgriffsteil ist eine einfache Sperranordnung zum drehfesten Festhalten des eingelegten Kabels untergebracht, die aus einen angelenkten Hebel mit profilierter Fusspartie im Bereich der Anlenkstelle besteht. Wenn der Handgriffsteil mit der einen Hand umgriffen wird, wird der Hebel in den Schlitz eingedrückt, und seine Fusspartie beaufschlägt das Kabel.

Im Schlitz im Führungsbahnteil ist ein Messerträger in Form eines an seinen vom Handgriffsteil entfernten zweiten Ende an das vom Handgriffsteil entfernte zweite Ende des Führungsbahnteiles angelenkten Hebels angeordnet, in dem in gegenseitigen Abständen verschieden lange Messerorgane angeordnet sind, das längste am nächsten der Anlenkstelle. Ähnlich dem Sperrhebel im Handgriffsteil, wird der Messerträger-Hebel beim Umfassen des Führungsbahnteiles von der anderen Hand allmählich in seinen Schlitz eingedrückt, wobei die einzelen Messer, beginnend mit dem welches am nächsten der Anlenkstelle liegt, in die äusseren Schichten des Koaxialkabels eindringen.

Dadurch wäre an und für sich eine Materialstauung zufolge des ersten Einschnittes verhindert. Das Problem liegt jedoch darin, dass es nicht möglich ist, zwei koaxial neben einander angeordnete rohrförmige Teile um zumindest 360° gegensteitig zu verdrehen, ohne dabei zumindest einmal, eher aber widerholt, den einen oder den anderen Teil freizulassen und von neuem in neuer Drehlage zu ergreifen. Entweder die Sperrung, oder der Einschnitt müssen somit unterbrochen werden, was für das Arbeitsresultat äusserst ungünstig ist. Hierzu kommt noch der Umstand, dass die Kraft, mit welcher der Messerträger-Hebel eingedrückt wird, keineswegs davon abhängig gemacht werden kann, mit welchen Geschwindigkeit man sich das Eindringen der Messer wünscht, sondern diese Kraft ist primär davon abhängig, wie fest der Führungsbahnteil umgriffen werden muss, um gegenüber dem Handgriffsteil überhaupt gegen den Widerstand der eindringenden Messer verdreht werden zu können. Ferner kommt der mit Messern bestückte Messerträger-Hebel in seiner Endlage in der in diesem Zustand allseitig geschlossen engen Bohrung dicht neben dem Kabel zu liegen, was zum Ansammeln von Isolationsresten u.s.w. führen kann.

Aus der US—A 3,688,404 ist ein Abisoliergerät bekannt, bei dem der Führungsbahnteil winkelrecht zu einem länglichen Handgriffsteil verläuft. Das Gerät weist ein einziges Messer auf, welches verschwenkbar in einen Messerträger angeordnet ist, der lageeinstellbar von einen Kurbelarm getragen wird. Das Gerät kann nicht für die Abisolierung von Koaxialkabeln angewandt werden.

Die vorliegende Erfindung stellt sich die Aufgabe ein Gerät der im Oberbegriff des angeschlossenen Patentanspruches 1 angeführten Art zu schaffen, bei dem bei Beibehaltung der Möglichkeit die eingangs erwähnte Staugefahr auszuschalten, das Durchführen der Drehbewegung des Führungsbahngliedes erheblich erleichtert wird und ausserdem die Regelung des Messereingriffes von der Kraft zum Antrieb der Drehbewegung unabhängig gemacht wird. In einer bevorzugten Ausführungsform sollen ferner bei der Einführung des Kabels in das Führungsbahnglied ein grosser freier Raum zwischen dem Messerträger und dem Kabel sowie die genaue Arbeitslage des Messerträgers, gewählt werden können.

Die Kennzeichen der Erfindung gehen aus dem angeschlossenen Patentanspruch 1 hervor. In Unteransprüchen sind vorteilhafte Weiterbildungen erfasst.

Die Erfindung soll nun an Hand von einigen Ausführungsbeispielen gemäss der beiliegenden schematischen Zeichnungen näher erläutert werden.

Hierbei zeigt:

Fig. 1a und 1b die zwei eingangs erwähnten Abmantelungsarten eines Koaxialkabels;

Fig. 2 eine Seitenansicht, teilweise im Schnitt, einer ersten Ausführungsform des erfindungsgemässen Gerätes;

Fig. 3 einen Schnitt durch den Messerträger des Gerätes gemäss Fig. 2 entlang der Ebene S—S in Fig. 2;

Fig. 4 einen analogen Schnitt durch eine abgewandelte Ausführungsform des Messerträgers und der Messer;

Fig. 5 eine Seitenansicht einer zweiten Ausführungsform des erfindungsgemässen Gerätes;

Fig. 6 eine Seitenansicht einer modifikation der ersten Ausführungsform des erfindungsgemässen Gerätes;

Fig. 7 eine Ansicht in Richtung des Pfeiles VII des oberen Teiles des Gerätes gemäss Fig. 6;

Fig. 8 eine Draufsicht auf die Messerpatrone des Gerätes gemäss Fig. 6;

Fig. 9 eine Seitenansicht in grösserem Maßstab der Messerpatrone des Gerätes gemäss Fig. 6;

Fig. 10 eine Ansicht, in gleichem Maßstab wie Fig. 9, der Innenseite eines Schenkels des bügelförmigen Messerträgers des Gerätes gemäss Fig. 6;

Fig. 11 die Stirnansicht dreier verschiedener Führungsbahneinlagen; und

Fig. 12 eine Draufsicht in grösserem Maßstab auf das äussere Ende des Führungsbahnteiles des Gerätes gemäss Fig. 6 mit einer Führungsbahneinlage gemäss Fig. 11.

Teile mit gleicher Funktion sind in allen Zeichnungsfiguren mit gleichen oder analogen Bezugszeichen bezeichnet.

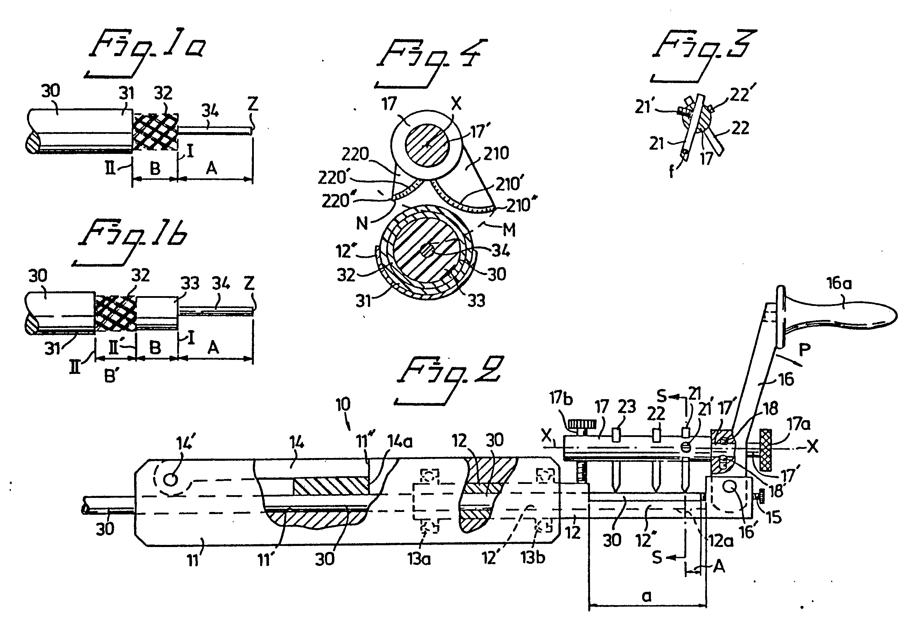

Gemäss Fig. 1a und 1b, die sich nicht direkt auf die vorliegende Erfindung beziehen, wird ein Koaxialkabel 30 derart abgemantelt, dass in vorgewähltem Abstand A vom Kabelende Z in der Ebene I ein erster Einschnitt bis zum leitenden Kern 34 des Kabels, und in einem axialen Abstand B (Fig. 1a) oder B + B' (Fig. 1b) hiervon, in der Ebene II, ein zweiter Einschnitt bloss durch die äussere Isolationsschicht 31, und gegebenenfalls (Fig. 1b) in der Ebene III noch ein dritter Einschnitt bis zur inneren Isolationsschicht 33 durchgeführt wird. Die abgetrennten Teile der Isolation werden danach vom Kabel abgestreift. In dem ziemlich kurzen Abschnitt B tritt beim gleichzeitigen Eingriff aller Messer eine Materialstauung ein, welche insbesondere das am tiefsten eindringende Messer in der Ebene I bei der nachfolgenden Drehbewegung abbremst.

Das Gleiche tritt zwar auch im Abschnitt B' ein, aber wegen der kleineren Dicke des durchgetrennten Materials in kleinerem Ausmass. Das beschriebene Verfahren ist bekannt.

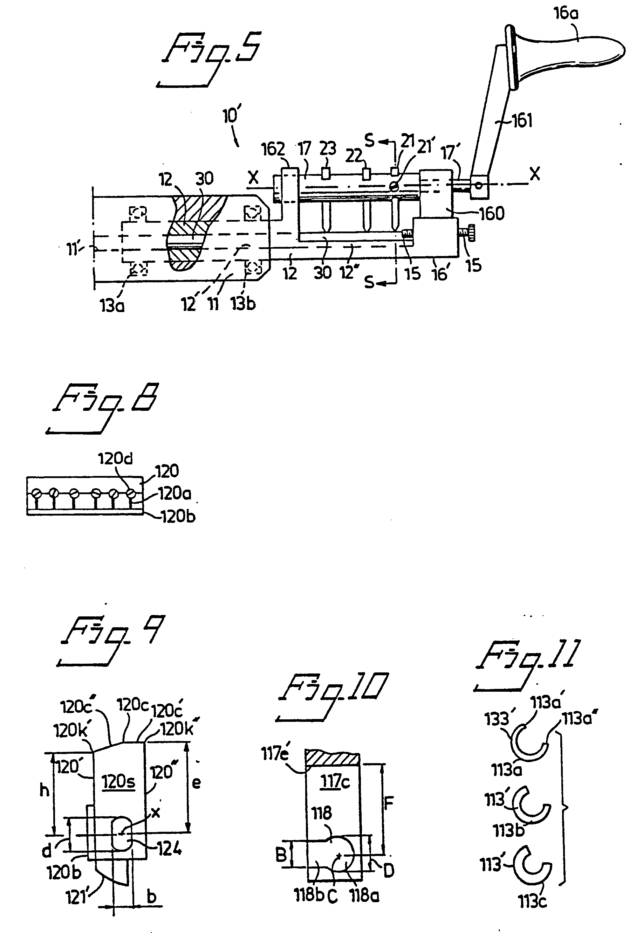

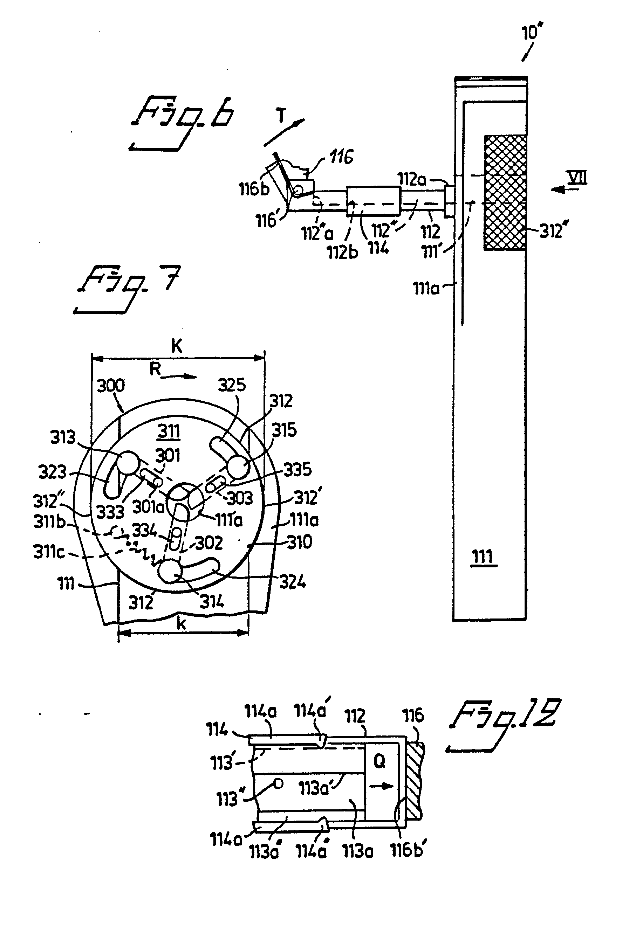

Das erfindungsgemässe Gerät 10 weist gemäss Fig. 2 und 3 einen länglichen Handgriffsteil 11 auf der mit einer axialen Durchgangsöffnung 11' versehen und an der Oberfläche eventuell geriefelt ist, was nicht dargestellt ist. Ein ebenfalls mit einer axialen Öffnung 12' versehenes längliches, rohrförmiges Führungsbahnglied 12 ist mittels Lagern 13a, 13b im Handgriffsteil 11 drehbar angeordnet, so dass die Öffnungen 11' und 12', die beide einen derartigen Diameter aufweisen, dass ein abzuisolierendes Koaxialkabel 30 mit vorbestimmtem Maximalquerschnitt leicht durch sie hindurch geschoben werden kann, miteinander fluchten.

Im Handgriffsteil 11 ist ein aus der Oberfläche des Handgriffsteiles etwas hervorstehender Hebel 14 in einem axial verlaufenden länglichen Schlitz 11'' angeordnet. Der Hebel 14 ist an einem seinen Enden zweckmässiger Weise dem vom Führungsbahnglied weiter entferten Ende, im Handgriffsteil 11 bei 14' gelenkig gelagert und ist am entgegengesetzten Ende mit einem Bremselement in Form eines Gummiklotzes 14a versehen. Wenn der Handgriffsteil 11 fest ergriffen wird, wird der Hebel 14 eingedrückt und der Klotz 14a an ein in die Öffnung 11' eingeschobenes Koaxialkabel 30 angepresst, wodurch das Kabel drehfest mit dem Handgriffsteil 11 verbunden wird. Diese Lage ist in Fig. 2 dargestellt.

Das Führungsbahnglied 12 ist in dem aus dem Handgriffsteil 11 herausragenden Abschnitt entlang einer vorgewählten Strecke bis zu einem gewissen Teil seines Querschnittes, z.B. etwa der Hälfte, abgetragen, wodurch die axiale Öffnung 12' zu einem die eigentliche Führungsbahn 12'' bildenden Trog oder Auflagebett für einen entsprechenden, die Abstände bzw. Strecken A + B oder A + B + B' umfassenden Endabschnitt des Koaxialkabels 30 gestaltet wird. Eine einstellbare Endanschlagsschraube 15 ermöglicht eine genaue Einstellung des Abstandes A.

An dem vom Handgriffsteil 11 entfernten freien zweiten Ende des Führungsbahngliedes 12 ist bei 16' ein im wesentlichen winkelrecht zur Führungsbahn 12'' vorspringender Hebelarm 16 schwenkbar im Führungsbahnglied 12 gelagert. An seinem freien Ende ist der Hebelarm 16 mit einem drehbar befestigten Kurbelhandgriff 16a versehen und bildet zusammen mit diesem ein Kurbelglied. Im Fussteil des Hebelarmes 16 ist ein länglicher, im Abstand entlang der Führungsbahn 12'', und in Wirkungslage im wesentlichen parallel mit ihr, verlaufender Messerträger 17 mittels eines Lagerzapfens 17' beschränkt drehbar gelagert. Von einem am herausragenden freien Ende des Lagerzapfens 17' angeordneten Stellknopf 17a kann der Messerträger 17 z.B. in einem Bereich von ± 25° in zwei verschiedene Endlagen gebracht werden, die von einem Anschlagzapfen 18 bestimmt sind, der aus dem Lagerzapfen 17' herausragt und sich hierbei in einer kreisbogenförmigen Ausfräsung von vorgewähltem Ausmass — z.B. 50° — im Fussteil des Hebelarmes 16 bewegen kann. Die beiden Enden der Ausfräsung bestimmen dann die beiden Endlagen des Messerträgers.

In Querbohrungen in dem z.B. zylindrisch gestalteten Messerträger 17 sind einzelne Messer 21 (für den Einschnitt bei I), 22 (für den Einschnitt bei II') und 23 (für den Einschnitt bei II) eingesteckt und mittels Schrauben wie 21', 22' in gewählter Lage (längenmässig) gesichert. Hierbei ist die Anordnung jedoch so, dass die Messer 22 und 23 (das Messer 23 ist in Fig. 2 gänzlich vom Messer 22 verdeckt und ist somit nicht sichtbar) in Querschnittsrichtung eine andere Winkellage als das Messer 21 einnehmen. Durch Betätigung des Stellknopfes 17a wird der Messerträger 17 entweder in eine erste Endlage für den Eingriff bloss des Messers 21, oder in eine zweite Endlage für den Eingriff des Messers 22 und eines eventuellen dritten Messers 23 gebracht.

An dem dem Handgriffsteil 11 zugewandten ersten Ende des Messerträgers 17 ist ein Anschlag zur Festlegung seiner Arbeitslage gemäss Fig. 2 vorgesehen, und zwar in dem dargestellten Beispiel ein einstellbarer Anschlag in Form einer Stellschraube 17b deren Ende zum Anliegen an den nicht abgetragenen Teil des Führungsbahngliedes kommen kann.

Die stabförmigen Messer 21—23 können mit Vorteil im Querschnitt die an sich bekannte Form einer dünnen bikonvexen Linse aufweisen, wie bei f angedeutet ist. Ferner kann in der Führungsbahn 12'' an der Stelle des Einschnittes in der Ebene I bzw. S—S eine Vertiefung 12a angeordnet sein. Sowohl die genannte Profilform der Messer, als auch die Vertiefung dienen dazu, die Reibung des Messers gegen die Isolationsschichten weiter herabzusetzen, wobei die Vertiefung 12a zur Aufnahme einer lokalen Ausbuchtung der durchschnittenen Isolationsschicht vorgesehen ist.

Das Gerät wird auf folgende Weise angewandt:

Die Einstellschraube 15 wird für die gewünschte Länge A eingestellt und der Hebelarm 16 wird im Sinne des Pfeiles P verschwenkt, wodurch der Messerträger 17 in eine Ruhelage überführt wird in der die Führungsbahn 12'' frei von den Messern 21—23 ist. Ausserdem kann der Einstellknopf 17a so betätigt werden, dass der Messerträger 17 eine mittlere Nichteingriffslage (vergl. Fig. 4) einnimmt, in der keines der Messer eingreift auch wenn sich der Messerträger in der in Fig. 2 dargestellten Arbeitslage befindet. Die mittlere Nichteingriffslage des Messerträgers 17 ist durch eine federbelastete Einrastkugel 18' festgelegt, welche im Fussteil des Hebelarmes 16 angeordnet ist und in eine entsprechende Vertiefung im Lagerzapfen 17' des Messerträgers 17 einrasten kann.

Danach wird ein Kabel 30 in die Öffnungen 11', 12' und 12'' bis zum Anschlag an die Schraube 15 eingeschoben und der Hebelarm 16 wird gegen den Sinn des Pfeiles P verschwenkt bis die Anschlagsschraube 17b an das Führungsbahnglied 12 anschlägt.

Der Handgriffsteil 11 wird vom Anwender mit der einen Hand fest erfasst, wobei der Hebel 14 niedergedrückt und der Gummiklotz 14a an das eingeschobene Kabel 30 angedrückt wird. Dann wird der Knopf 17a so betätigt, dass der Messerträger 17 derart verschwenkt wird, dass das Messer 21 in das Kabel 30 eindringt. Durch diese Bewegung werden die Messer 22 und 23 noch weiter vom Kabel entfernt. Während zumindest einer vollen Umdrehung des Führungsbahngliedes 12 im Handgriffsteil 11 und um das eingelegte Kabel 30 herum, was mit Hilfe des von der zweiten Hand des Anwenders bedienten Kurbelhandgriffes 16a durchgeführt wird, wird der bisher nur beschränkte Einschnitt des Messers 21 auf den ganzen Umfang des Kabels 30 erweitert, wobei die Isolationsschichten keinesweges behindert sind sich in Axialrichtung des Kabels frei zu verlagern (nach links in Fig. 2). Die Führungsbahn 12'' dreht sich somit um das stillstehende Kabel 30 herum, welches vom eingreifenden Messer an sie angedrückt wird. Zur Erleichterung der Manipulation kann die Führungsbahn zweckmässiger Weise mit einer reibungsherabsetzenden inneren Bekleidung, z.B. aus zu diesem Zweck bekanntem Kunststoff, versehen sein (siehe Fig. 11).

Durch neuerliche Betätigung des Knopfes 17a wird danach der Messerträger 17 in die zweite Endlage gebracht, wo die Messer 22 und 23 Einschnitte durchführen, wobei das Messer 21 vom Kabel entfernt worden ist. Während zumindest einer neuerlichen vollen Umdrehung werden auch die Einschnitte dieser Messer auf den ganzen Umfang des Kabels 30 erweitert. Danach wird der Messerträger 17 durch Verschwenken des Hebelarmes 16 im Sinne des Pfeiles P in Ruhelage gebracht und/oder durch Betätigen des Knopfes 17a in Nichteingriffslage gedreht und das Kabel 30 wird aus dem Gerät herausgezogen (nach links in Fig. 2). Eventuell kann der Messerträger in Arbeits- und Eingriffslage verbleiben und dann werden beim Herausziehen des Kabels die abgetrennten Teile von der eingreifenden Messern 22, 23 festgehalten und abgestreift.

In Fig. 4 ist eine alternative Ausführungsform der Messer dargestellt, wo die Messer 210 und 220 kreisbogenförmige Schneidkanten 210' und 220' aufweisen, die das Kabel 30 gleich wie die Messer 21, 22 von entgegengesetzten Seiten angreifen, und deren Endspitzen 210'', 220'' bei der Heranführung in Eingriffslage kreisbogenförmige Bahnen M und N beschreibe gleicher Art wie auch die Spitzen der Messer 21 und 22 in Fig. 3.

Es ist offensichtlich, dass die Kippbewegung des Messerhalters 17 um den Schwenkpunkt 16' in Fig. 2 auch durch eine geradlinige, mit sich parallele Annäherungsbewegung des Messerträgers 17 ersetzt werden kann. Eine derartige Bewegung kann aber auch gänzlich entfallen, indem zur Einführung des Kabels ins Gerät bloss die mittlere Nichteingriffslage (z.B. gemäss Fig. 4) des Messerträgers ausgenützt wird. Ein Gerät 10' solcher Art ist in Fig. 5 dargestellt. Der Messerträger 17 ist beiderseits in Lagerblöcken 160, 162 in vorbestimmtem beschränktem Umfang drehbar gelagert, und verläuft parallel mit der Führungsbahn 12''. Der Handgriff 16a ist an einem Art 161 angeordnet der gleich dem Knopf 17a gemäss Fig. 2 drehfest mit dem Messerträger 17 verbunden ist. Bei Betätigung des Handgriffes 16a zur Drehung z.B. im Uhrzeigersinn wird vorerst der Messerträger 17 in seine für den vollen Eingriff des Messers 21 vorgesehene Endlage bis zum Anschlag des Bolzens 18 (Fig. 2) an das eine Ende der kreisbogenförmigen Ausfräsung gebracht, und dann wird der ganze Teil 12 in Drehung versetzt. Nach zumindest einer vollen Umdrehung wird der Handgriff 16a zur Drehung im entgegengesetzter Richtung betätigt, und der Vorgang wiederholt sich für die Messer 22 und 23 (nachdem der Bolzen 18 das entgegengesetzte Ende der kreisbogenförmigen Ausfräsung erreicht hat). In zumindest einem der Lagerblöcke 160, 162 ist auch die vorgenannte Einrastanordnung mit der federbelasteten Kugel 18' zur Festlegung der mittleren Nichteingriffslage vorgesehen.

Das Gerät 10'' gemäss Fig. 6—12 weist einen länglichen Handgriffsteil 111 auf, an dessen einem Ende eine Durchgangsöffnung 111' quer zur Längsrichtung des Handgriffsteiles vorgesehen ist. Im Anschluss an die Durchgangsöffnung 111' ist im Handgriffsteil 111 drehbar ein Führungsbahnglied 112 gelagert, welches aus dem Handgriffsteil 111 winkelrecht an einer Seite herausragt. Im Führungsbahnglied 112 ist auf ähnliche Weise wie im Führungsbahnglied 12 eine Führungsbahn 112' angeordnet. An dem vom Handgriffsteil 111 entfernten freien Ende des Führungsbahngliedes 112 ist mittels eines Zapfens 116' ein bügelförmiger Messerträger 116 schwenkbar gelagert, welcher, gleich dem messerträger 16, auch einen nicht dargestellten herausragenden Hebelarm aufweist der mit einem Kurbelhandgriff versehen ist. Eine U-förmige Feder 116b, deren geknickte Schenkel beiderseits des Messerträgers 116 verlaufen, während der Steg 116b' (Fig. 12) das Ende der Führungsbahn 112' überquert, hält den Messerträger in der dargestellten verschwenkten Ruhelage.

Die Sperranordnung besteht beim Gerät 10'' aus einem automatischen Klemmfutter 300 mit drei länglichen Klemmbacken 301, 302, 303. Im Handgriffsteil 111 ist ein topfförmiges Betätigungsglied 310 mit seiner Bodenwand 311 nach aussen gewendet drehbar gelagert. Es hat eine geriefelte äussere Seitenflächen 312 mit einem Durchmesser K der etwas grösser ist als die Breite k des Handgriffsgliedes 111, so dass Teile 312', 312'' der Seitenfläche 312 aus dem Handgriffsteil 111 seitlich etwas herausragen und von Fingern der Hand, von welcher der Handgriffsteil 111 erfasst worden ist, leicht betätigt werden können.

Im Handgriffsteil 111 sind drei in Winkelabständen von je 120° um die Durchgangsöffnung 111' verteilte Stifte 313, 314, 315 fest verankert. Die Stifte 313—315 haben einen schmaleren Schaftteil der nicht sichtbar ist weil er sich unterhalb der Bodenwand 311 befindet, und einen breiteren oberhalb der Bodenwand 311 befindlichen Kopfteil. An dem jeweiligen Schaftteil sind die Klemmbacken 301, 302, 303 mit ihrem einen Ende frei drehbar gelagert. Die Bodenwand 311 hat in der Mitte eine kreisrunde Mündung 111'a der Durchgangsöffnung 111' und an der Peripherie drei kreisbogenförmige, parallel mit der Seitenfläche 312 verlaufende Schlitze 323, 324, 325, und zwischen diesen Schlitzen und der Mündung 111'a drei radial verlaufende geradlinige Schlitze 333, 334, 335. Die Schlitze 323—325 haben eine Breite, welche dem Durchmesser der Schaftteile der Stifte 313—315 entspricht und kleiner als der Durchmesser ihrer Kopfteile ist. Das Betätigungsglied 310 wird somit von den Stiften 313—315 im Handgriffsteil 111 festgehalten mit Drehmöglichkeit im Ausmass der Länge der Schlitze 323—325. An den Klemmbacken 301, 302, 303 sind vorspringende Eingriffszapfen wie 301a in Abstand von den jeweiligen Anlenkstellen der Klemmbacken an die Stifte 313—315 angeordnet. Die Eingriffszapfen 301a etc. greifen in die radialen Schlitze 333—335 in der Bodenwand 311 ein. Ein im Inneren des Betätigungsgliedes 310, z.B. zwischen dem Stift 314 und einem aus der Bodenfläche 311 nach innen vorspringenden Zapfen 311b angeordnetes Ziehfederorgan 311c hält das Betätigungsglied 310 mit vorgewählter Spannkraft in der in Fig. 7 dargestellten Lage, welche der Schliesslage des Klemmfutters 300 entspricht. Eine aus dem Handgriffsteil 111 vorspringende Schutzwand 111a schützt den oder die das Betätigungsglied 312 beaufschlagenden Finger vor einem Abgleiten in den Bereich des Messerträgers 116.

Das Gerät wird auf folgende Weise angewandt:

Durch Zugriff an zumindest einem der Teile 312', 312'' der Seitenfläche 312 wird bei Überwindung der Kraft der Feder 311c das Betätigungsglied 312 im Sinne des Pfeiles R verdreht bis die Stifte 313—315 an den entgegengesetzten Enden der Schlitze 323—325 anliegen als wie in Fig. 7 dargestellt. Dadurch werden über die Schlitze 333—335 und die Zapfen wie 301a die Klemmbacken 301, 302, 303 um die Stifte 313—315 derart verschwenkt, dass sie die Mündung 111'a freigeben. Das abzuisolierende Kabel wird in die Durchgangsöffnung 111' und in die Führungsbahn 112''

bis zum Anschlag bei 112''a eingeführt. Danach wird das Betätigungsglied 312 freigelassen, die Feder 331c verdreht es gegen den Sinn des Pfeiles *R* und die Klemmbacken 301—303 umfassen das Kabel und verbinden es über die Stifte 313—315 drehfest mit dem Handgriffsteil 111.

Mit der anderen Hand erfasst der Anwender den Kurbelhandgriff und bei Überwindung der ziemlich schwachen Feder 116 verschwenkt er den Messerträger 116 im Sinne des Pfeiles *T*. Die Schwenkbewegung im Sinne des Pfeiles *T* wird abgeschlossen, wenn der Messerträger 116 an einen Kragen 112a am Führungsbahnglied 112 anschlägt. Analog wie beim Gerät 10 gemäss Fig. 2, können sich die Isolationsteile noch eine Zeit lang nach dem ersten Eingriff eines Messers unbehindert in Längsrichtung des Kabels verlagern konten.

Damit in einem Gerät 10'' Kabel verschiedener Durchmesser bearbeitet werden können, werden vorzugsweise austauschbare längliche Einlagen 113a—113c (Fig. 11) in der Form eines der Länge nach aufgeschnittenen Rohres für das Führungsbahnglied 112 bereitgestellt. Die Einlagen haben einen gleichen äusseren Durchmesser und verschiedene innere Durchmesser. Ein Schlitten 114 ist aussen am Führungsbahnglied 112 angeordnet und weist gemäss Fig. 12 umgebogene Längskanten 114a auf an deren äusserem Ende je eine vorspringende Eingriffsklaue 114a', 114a'' vorgesehen ist. Mit den Längskanten 114a ist der Schlitten 114 gleitbar an den Längskanten des Führungsbahngliedes 112 eingehängt, wobei eine der Eingriffsklauen, 114a'', eine der Endkanten, 113a'', der eingelegten Einlagen, z.B. 113a, umfasst. Die andere Eingriffsklaue 114a' greift in eine im Abstand von der anderen Längskante 113a' und parallel mit dieser angeordnete längliche Spur 113' in der Aussenfläche der Einlage ein. Die Einlage befindet sich somit im Führungsbahnglied 112 in der in Fig. 11 dargestellten schrägen Lage, da je beide Eingriffsklauen 114a', 114a'' gleich hoch liegen. Die Einlagen sind etwas kürzer als die Führungsbahn, wie aus Fig. 12 ersichtlich ist, und haben im Bodenbereich eine Öffnung 113'' in die ein kurzer im Bodenbereich des Führungsbahngliedes 112 angeordneter Zapfen 112b eingreift. Der Schlitten 114 ist kürzer als das Führungsbahnglied 112 (siehe Fig. 6) und die einzelnen Einlagen 113a—113c werden derart eingelegt und herausgenommen, dass der Schlitten 114 bis an das vom Handgriffsteil 111 entfernte Ende des Führungsbahngliedes 112 verschoben wird, also nach rechts in Fig. 12 (Pfeil Q). Dadurch verlässt die Eingriffsklaue 114a' die Spur 113' und die Eingriffsklaue 114a'' die Längskante 113a'', so dass die Einlage 113a vom Zapfen 112b abgehoben werden kann. Beim Einlegen wird in verkehrter Reihenfolge vorgegangen.

**Patentansprüche**

1. Abisoliergerät (10, 10', 10'') für Koaxialkabel (30), umfassend
einen länglichen Handgriffsteil (11, 111) in dem eine durchgehende Öffnung (11', 111') für das bearbeitete Kabel, und eine Sperranordnung (14, 300) zu dessen drehfestem Festhalten angeordnet ist;

ein längliches Führungsbahnglied (12, 112) welches an seinem ersten Ende unbeschränkt drehbar an den Handgriffsteil (11, 111) im Bereich der genannten Öffnung (11', 111') angeschlossen und hierbei angeordnet ist, ein aus dem Handgriffsteil (11, 111) her eingeführtes Kabel entlang einer vorbestimmten Strecke für den Eingriff von Messerorganen freizulegen;

zumindest zwei in einem länglichen Messerträger (17, 117) in Abstand voneinander angeordnete Messerorgane (21—23, 121—123, 210, 220) verschiedener Länge zur Durchführung eines kurzen Einschnittes vorgewählter Tiefe, der durch gegenseitige Rotation des Kabels und des Messerträgers (17, 117) auf dem ganzen Umfang des Kabels erstreckbar ist, wobei das Führungsbahnglied (12, 112) und der Messerträger (17, 117) zwecks genannter Rotation mit Hilfe eines Kurbelgliedes (16, 116) gemeinsam gegenüber dem Handgriffsglied (11, 111) drehbar sind, und wobei sich das erste Ende des Messerträgers (17, 117) näher dem Handgriffsteil (11, 111) befindet und der Messerträger (17, 117) an seinem zweiten Ende — in beschränktem Umfang zwischen zwei Endlagen beweglich — mit dem zweiten Ende des Führungsbahngliedes (12, 112) verbunden ist, und das längste Messerorgan (21, 121, 210) dem zweiten Ende des Messerträgers (17, 117) am nächsten gelegen ist, so dass der Messerträger (17, 117) gegenüber dem Führungsbahnglied (12, 112) derart verstellbar ist, dass in der Anfangsphase einer Abmantelungsoperation nur das dem zweiten Ende des Führungsbahngliedes (12, 112) am nächsten liegende Messerorgan (21, 121, 210), welches den tiefsten Einschnitt durchzuführen hat, alleine zum Eingriff gelangt, wodurch durch dessen Einschnitt verursachte Verschiebungen der Isolation in Längsrichtung des Kabels unbehindert stattfinden können, dadurch gekennzeichnet, dass der Messerträger (17, 117) zur Drehung um seine Längsachse zwischen zwei seitlichen Endlagen angeordnet ist, und dass das Messerorgan (21), welches dem zweiten Ende des Messerträgers (17, 117) am nächsten angeordnet ist, das Kabel in einer der seitlichen Endlagen des Messerträgers (17, 117) von entgegengesetzter Seite angreift das es in der anderen Endlage des Messerträgers (17, 117) alle anderen Messerorgane tun, so dass durch Verschwenken des Messerträgers (17, 117) von der einen seitlichen Endlage in die andere entweder nur das erstgenannte Messerorgan (21) alleine, oder nur alle übrigen Messerorgane zum Einsatz gelangen.

2. Abisoliergerät gemäss Patentanspruch 1, dadurch gekennzeichnet, dass der Messerträger (17) zwischen den beiden seitlichen Endlagen eine mittlere Lage aufweist in der keines der Messerorgane zum Einsatz gelangen kann.

3. Abisoliergerät gemäss Patentanspruch 1 oder 2, dadurch gekennzeichnet, dass der Messerträger mit Organen (17a, 161, 18, 18') zur Einstellung und Festlegung der beiden Endlagen und gegebenenfalls auch der mittleren Nichteingriffslage versehen ist.

4. Abisoliergerät gemäss einem der vorgehenden Patentansprüche, dadurch gekennzeichnet, dass zumindest eines der Messerorgane (210, 220) eine kreisbogenförmige Schneidkante (210', 220') aufweist.

5. Abisoliergerät gemäss einem der vorgehenden Patentansprüche, dadurch gekennzeichnet, dass im Führungsbahnglied am Orte zumindest eines Einschnittes eine Ausbuchtung (12a) zur Aufnahme eines verdrängten Teiles der Kabelisolation vorgesehen ist.

6. Abisoliergerät gemäss einem der vorgehenden Patentansprüche, dadurch gekennzeichnet, dass der Messerträger (17, 117) am zweiten Ende des Führungsbahngliedes an dieses angelenkt ist zur Verschwenkung um eine winkelrecht zur Längsrichtung der Führungsbahn (12'', 112'') verlaufende Schwenkachse (16', 116') zwischen einer schräg zur Führungsbahn (12'', 112'') verlaufenden Ruhelage und einer im wesentlichen parallel mit der Führungsbahn verlaufenden Arbeitslage, wobei am ersten Ende des Führungsbahngliedes und am entsprechenden Ende des Messerträgers (17, 117) zusammenarbeitende Endanschlagorgane (17b, 112a, 117c') zur Festlegung der Arbeitslage in der Schlussphase einer Abmantelungsoperation vorgesehen sind.

7. Abisoliergerät gemäss einem der vorgehenden Patentansprüche, dadurch gekennzeichnet, dass für das Führungsbahnglied (112) eine Vielzahl darin anbringbarer austauschbarer Einlagen (113a—113c) für verschiedene Kabeldurchmesser vorgesehen ist.

8. Abisoliergerät gemäss einem der vorgehenden Patentansprüche, dadurch gekennzeichnet, dass die Sperranordnung als ein von Federkraft (311b) automatisch in geschlossener Lage gehaltenes Klemmfutter (300) gestaltet ist.

9. Abisoliergerät gemäss einem der vorgehenden Patentansprüche, dadurch gekennzeichnet, dass das Führungsbahnglied (112) winkelrecht zum Handgriffsteil (111) verläuft.

10. Abisoliergerät gemäss einem der Patentansprüche 1 bis 5, dadurch gekennzeichnet, dass das Führungsbahnglied (12) in an sich bekannter Weise in Verlängerung des Handgriffsteiles (11) verläuft und dass das Sperrorgan aus einem in einem länglichen Spalt (11'') im Handgriffsteil (11) schwenkbar angeordneten Hebel (14) besteht der etwas aus der Oberfläche des Handgriffsteiles herausragt und an seinen freien Ende mit einem an ein eingeführtes Kabel andrückbaren Bremselement (14a) versehen ist.

## Revendications

1. Appareil à dénuder (10, 10', 10'') pour câbles coaxiaux (30) comprenant:
une partie poignée (11, 111) de forme allongée, dans laquelle est ménagée une ouverture traversante (11', 111') destinée à recevoir le câble à travailler, et un dispositif de blocage (14, 300) servant à maintenir le câble bloqué en rotation;
un organe formant voie de guidage (12, 112) de forme allongée, qui, à sa première extrémité, est raccordé à la partie poignée (11, 111), avec possibilité de rotation illimitée, dans la région de ladite ouverture (11', 111') et disposé pour dégager un câble introduit à partir de la partie poignée (11, 111) sur une longueur prédéterminée en vue d'une attaque par des organes lames;
au moins deux organes lames (21—23, 121—123, 210, 220) disposés à un certain écartement mutuel dans un porte-lames (17, 117) de forme allongée, de différentes longueurs, pour l'exécution d'une entaille courte, d'une profondeur prédéterminée, et qui peut être étendue sur toute la circonférence du câble sous l'effet d'une rotation relative entre le câble et le porte-lames (17, 117), l'organe formant voie de guidage (12, 112) et le porte-lames (17, 117) pouvant être mis en rotation conjointement par rapport à la partie poignée (11, 111) pour l'exécution de la rotation précitée, à l'aide d'un organe manivelle (16, 116); la première extrémité du porte-lames (17, 117) se trouvant plus près de la partie poignée (11, 111) et le porte-lames (17, 117) étant relié par sa deuxième extrémité — avec possibilité de déplacement sur une course limitée entre deux positions extrêmes — à la deuxième extrémité de l'organe formant voie de guidage (12, 112), et l'organe lame le plus long (21, 121, 210) étant le plus rapproché de la deuxième extrémité du porte-lames (17, 117), de sorte que le porte-lames (17, 117) peut se déplacer par rapport à l'organe formant voie de guidage (12, 112) de telle manière que, dans la phase initiale d'une opération de dénudage, seul l'organe lame (21, 121, 210) qui est le plus rapproché de la deuxième extrémité de l'organe voie de guidage (12, 112), qui a à exécuter l'entaille la plus profonde, entre seul en prise, de sorte que, les translations de l'isolant dans la direction longitudinale du câble qui sont provoquées par cette entaille peuvent se produire sans obstacle, caractérisé en ce que le porte-lames (17, 117) est agencé pour tourner autour de son axe longitudinal entre deux positions latérales extrêmes, et en ce que l'organe lame (21) qui est le plus rapproché de la deuxième extrémité du porte-lames (17, 117) attaque le câble sur l'une des positions latérales extrêmes du porte-lames (17, 117), par le côté qui est à l'opposé de celui dans lequel tous les autres organes lames l'attaquent dans l'autre position extrême du porte-lames (17, 117), de sorte que, lorsqu'on fait pivoter le porte-lames (17, 117) d'une position latérale extrême à l'autre, soit le premier organe lame (21) seul, soit tous les autres organes lames seuls, entrent en action.

2. Appareil à dénuder selon la revendication 1, caractérisé en ce que, entre les deux positions latérales extrêmes, le porte-lames (17) peut prendre une position centrale dans laquelle aucun des organes lames ne peut être entrer en action.

3. Appareil à dénuder selon la revendication 1 ou 2, caractérisé en ce que le porte-lames est muni d'organes (17a, 161, 18, 18') destinés à régler et à fixer les deux positions extrêmes et éventuellement, la position centrale hors de prise.

4. Appareil à dénuder selon une des revendications précédentes, caractérisé en ce qu'au moins un des organes lames (210, 220) présente une arête tranchante en forme d'arc de cercle (210', 220').

5. Appareil à dénuder selon une des revendications précédentes, caractérisé en ce que, dans l'organe formant voie de guidage, il est prévu, à l'endroit d'au moins une entaille, un évidement (12a) destiné à loger une partie repoussée de l'isolant du câble.

6. Appareil à dénuder selon une des revendications précédentes, caractérisé en ce qu'à la deuxième extrémité de l'organe formant voie de l'organe, le porte-lames (17, 117) est articulé sur cet organe pour pivoter autour d'un axe d'articulation (16', 116') qui s'étend perpendiculairement à la direction longitudinale de la voie de guidage (12'', 112''), entre une position de repos qui s'étend obliquement par rapport à la voie de guidage (12'', 112'') et une position de travail qui s'étend à peu près parallèlement à la voie de guidage, cependant qu'à la première extrémité de l'organe voie de guidage et à l'extrémité correspondante du porte-lames (17, 117), sont prévus des organes de butée de fin de course coopérant entre eux (17b, 112a, 117c') qui servent à fixer la position de travail dans la phase finale d'une opération de dénudage.

7. Appareil à dénuder selon une des revendications précédentes, caractérisé en ce qu'il est prévu pour l'organe fornant voie de guidage (112), une pluralité d'éléments rapportés (113a à 113c) interchangeables, pouvant être montés dans cet organe, pour différents diamètres de câbles.

8. Appareil à dénuder selon une des revendications précédentes, caractérisé en ce que le dispositif de blocage est formé par une fourrure de serrage (300) qui est maintenue automatiquement dans la position fermée par la force d'un ressort (311b).

9. Appareil à dénuder selon une des revendications précédentes, caractérisé en ce que l'organe formant voie de guidage (112) s'étend perpendiculairement à la partie poignée (111).

10. Appareil à dénuder selon une des revendications 1 à 5, caractérisé en ce que l'organe formant voie de guidage (12) s'étend d'une façon connue en soi, dans le prolongement de la partie poignée (11) et le dispositif de blocage est composé d'un levier (14) monté oscillant dans une fente allongée (11'') de la partie poignée (11) et qui fait légèrement saillie au-delà de la surface de partie poignée, et est munie à son extrémité libre d'un élément de freinage (14a) qui peut être pressé contre un câble introduit.

## Claims

1. Stripping device (10, 10', 10'') for coaxial cable (30), including
an elongate handle section (11, 111) in which is arranged a through opening (11', 111') for the cable to be worked on, and a locking arrangement (14, 300) for its anti-rotational grip;
an elongate guide-track member (12, 112), which is connected at its first end to the handle section (11, 111) in the area of said opening (11', 111') so as to be unrestrictedly rotatable and thus arranged to expose a cable, fed in from the handle section (11, 111) along a predetermined path, to allow the application of the cutting means;
at least two cutting means (21—23, 121—123, 210, 220) of different lengths, disposed in an elongate knifeholder (17, 117) at a distance from each other, for making a short incision of preselected depth, which incision can be extended to the entire circumference of the cable by opposing rotation of the cable and the knifeholder (17, 117), in which respect, for the purpose of the mentioned rotation, the guide-track member (12, 112) and the knifeholder (17, 117) are simultaneously rotatable by means of a crank member (16, 116) opposite the handle member (11, 111), and in which respect the first end of the knife holder (17, 117) is nearer the handle member (11, 111), and the knifeholder (19, 117) is connected at its second end—movable to a limited extent between two end positions—to the second end of the guide-track member (12, 112), and the longest cutting means (21, 121, 210) is nearest the second end of the knifeholder (17, 117), so that the knifeholder (17, 117) is adjustable with respect to the guide-track member (12, 112) such that, in the initial phase of the stripping operation, only the cutting means (21, 121, 210) nearest the second end of the guide-track member (12, 112), which has to perform the deepest incision, is engaged whereby displacement of the insulation in the longitudinal direction of the cable caused by its incision can take place without hindrance, characterised in that the knifeholder (17, 117) is arranged to rotate around its longitudinal axis between two lateral end positions, and that the cutting means (21) which is disposed nearest the second end of the knifeholder (17, 117) engages the cable in one of the lateral end positions of the knifeholder (17, 117) from the side opposite to that of all other cutting means in the other end position of the knifeholder (17, 117), so that by tilting the knifeholder (17, 117) from the one lateral end position into the other either only the first mentioned cutting means (21) on its own, or only all the remaining cutting means become operative.

2. Stripping device according to patent claim 1, characterised in that the knifeholder (17) has between the two lateral end positions a central location wherein none of the cutting means can be operative.

3. Stripping device according to patent claim 1 or 2, characterised in that the knifeholder is provided with members (17a, 161, 18, 18') for the adjustment and locking of the two end positions and, if appropriate, also of the central inoperative location.

4. Stripping device according to one of the previous patent claims, characterised in that at least one of the cutting means (210, 220) has a round cutting edge (210', 220').

5. Stripping device according to one of the previous patent claims, characterised in that an indentation (21a) is provided in the guide-track member at the location of at least one incision to accommodate a removed part of the cable insulation.

6. Stripping device according to one of the previous patent claims, characterised in that the knifeholder (17, 117) is hinged onto the guide-track member at the second end of the latter for pivoting about a pivot axis (16', 116'), which is at right angles with respect to the longitudinal direction of the guide track (12'', 112''), between an inoperative position, which is transverse to the guide track (12'', 112''), and an operative position, which is substantially parallel with the guide track, in which respect co-acting end-stop members (17b, 122a, 117c') are provided at the first end of the guide-track member and at the corresponding end of the knifeholder (17, 117) for determining the operative position in the final phase of a stripping operation.

7. Stripping device according to one of the previous patent claims, characterised in that a plurality of inserts (113a—113c) are provided for the guide-track member (112), which inserts are exchangeable and insertable therein to suit different cable diameters.

8. Stripping device according to one of the previous patent claims, characterised in that the locking arrangement is a clamping sleeve (300) which is automatically held in its closed position by means of spring force (311b).

9. Stripping device according to one of the previous patent claims, characterised in that the guide-track member (112) extends at right angles to the handle member (111).

10. Stripping device according to one of the patent claims 1 to 5, characterised in that the guide-track member (12) is disposed in an already known manner as an extension of the handle member (11) and the locking member consists of a lever (14), pivotably arranged in an elongate gap (11') within the handle member (11), which slightly protrudes from the surface of the handle member and which is provided at its free end with a brake element (14a) depressable onto a supplied cable.

Fig.1a

Fig.4

Fig.3

Fig.1b

Fig.2

EP 0 140 397 B1

Fig.5

Fig.8

Fig.9

Fig.10

Fig.11

Fig. 6

Fig. 7

Fig. 12